# EUROPEAN PATENT APPLICATION

(11) **EP 1 748 203 A1**
(43) Date of publication of application: **31.01.2007**
(21) Application number: 05741408.8
(22) Date of filing: 18.05.2005
(51) Int. Cl.: F16C 41/00, F16C 19/38, F16C 33/58, B60B 35/18, B61F 15/12, G01K 1/14, G01P 3/486

(54) **BEARING WITH SENSOR**

(30) Priority: 19.05.2004 JP 2004149339
(71) Applicant: NTN CORPORATION, Osaka-shi, Osaka 550-0003 (JP)
(72) Inventor: ISHIKAWA, Shiro, Kuwana-shi Mie 5110811 (JP); TAKEDA, Yukihiro, Kuwana-shi Mie 5110811 (JP)
(74) Representative: White, Duncan Rohan
(86) International application number: PCT/JP2005/009091
(87) International publication number: WO 2005/111448

(57) **Abstract**

The rotation state of the bearing such as vibration is accurately sensed.

A plural of rollers rollably retained with a retainer are accommodated between an inner ring and an outer ring, and a sensor for sensing the rotation state of the bearing is directly attached to the outer ring. More specifically, the outer ring, having a housing attached to its outside diameter upper part, includes a radially protruding projection in the outside diameter lower part, and the sensor is attached to the end surface of the projection.

## Description

### BACKGROUND OF THE INVENTION

### 1. Field of the Invention

The present invention relates to a bearing with a sensor or a roller bearing for rotatably supporting railway vehicle axles for example, and more particularly to a bearing with a sensor for sensing its rotation state.

### 2. Description of the Related Art

Roller bearings that rotatably support the axles of railway vehicles such as freight cars are specially designed and produced for railway vehicle axle applications, and generally, they are double row cylindrical roller bearings or double row tapered roller bearings. The railway vehicles, such as freight cars as mentioned above, are required to include an ABS (antilock braking system) device for each car as a safety feature for the purpose of high-speed running.

There has been a bearing with a sensor attached to the bearing for sensing its rotation state during the drive of the railway vehicle so as to allow this ABS device to be mounted (see, for example, Japanese Patent Laid-Open Publication No. Hei 10-224909).

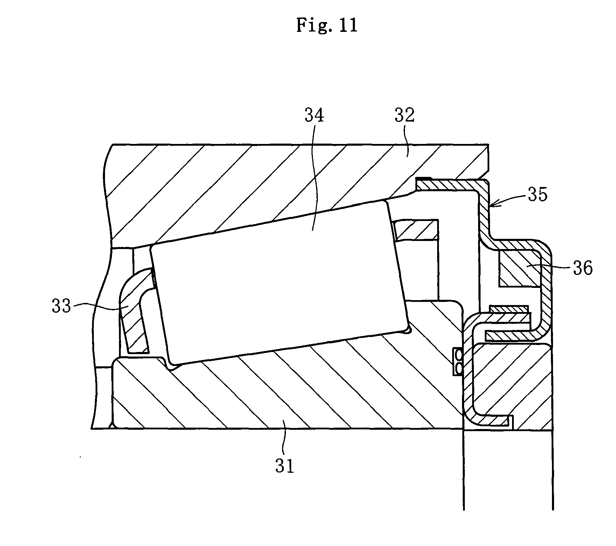

The bearing with a sensor of this type has a structure shown in Fig. 11, wherein a plurality of tapered rollers 34 rotatably retained with a retainer 33 are accommodated between an inner ring 31 and an outer ring 32, and an oil seal case 35 is fitted to the inside diameter end of the outer ring 32. A sensor 36 that senses the rotation state of the inner ring 31 relative to the outer ring 32 is attached to the oil seal case 35.

The above-described bearing with a sensor disclosed in Japanese Patent Laid-Open Publication No. Hei 10-224909 has its oil seal case 35 with the sensor 36 only being fitted into the inside diameter end of the outer ring 32, because of which the rigidity of the oil seal case 35 is low in the end portion where the sensor 36 is attached.

As the sensor 36 is attached to the distal end portion of the oil seal case 35 with this component design, if the sensor 36 is a vibration sensor, it is very hard to accurately measure the vibration in the bearing. Also if the sensor 36 is a temperature sensor, it will measure the temperature of the oil seal case 35 and it is hard to sense the precise temperature of the bearing components.

### SUMMARY OF THE INVENTION

The present invention was proposed in view of the above-described problems, and its object is to provide a bearing with a sensor that can accurately sense the rotation state of the bearing such as vibration.

As technical means for achieving the above object, the bearing with a sensor according to the present invention is characterized in that a plural of rollers rollably retained with a retainer are accommodated between an inner ring and an outer ring, and a sensor for sensing a rotation state of the bearing is directly attached to the outer ring. The "rotation state of the bearing" used herein means the number and direction of rotation of the inner ring, vibration of the bearing, and temperature of the outer ring. Therefore, the sensor for sensing the rotation state may be, for example, a rotary sensor, a vibration sensor, or a temperature sensor. The rollers, which are one of the bearing components, may be double row cylindrical rollers or double row tapered rollers.

In the bearing with a sensor of the present invention, since the sensor for sensing the rotation state of the bearing is directly attached to the outer ring, i.e., the sensor is fixedly attached to the outer ring that has high rigidity, precise determination of the rotation state of the bearing such as vibration can be easily achieved using the sensor.

The present invention is applicable to a bearing for rotatably supporting an axle of a railway vehicle, and in the case where the bearing is used for the railway vehicle axle, a housing is provided to the outside diameter upper part of the outer ring as part of the structure for attaching the bearing to the vehicle. In such a structure wherein the housing is provided to the outside diameter upper part of the outer ring, it is desirable that the sensor be arranged in the outside diameter lower part of the outer ring. With this design, the sensor can be directly attached to the outer ring easily with the housing.

A possible design for attaching the sensor to the outer ring may include a radially protruding projection formed to a portion of the outside diameter of the outer ring, with the sensor being attached to the end surface of the projection. With this design, the projection formed to the outside diameter of the outer ring is stopped from rotating by making contact with the housing, whereby disconnection of wires of the sensor is prevented.

According to the present invention, since the sensor for sensing the rotation state of the bearing is directly attached to the outer ring, i.e., the sensor is fixedly attached to the outer ring that has high rigidity, precise determination of the rotation state of the bearing such as vibration can be easily achieved using the sensor. As a result, the product quality and reliability are largely improved, and the bearing with a sensor has excellent safety features when used for a railway vehicle axle.

### BRIEF DESCRIPTION OF THE DRAWINGS

Fig. 1 is a cross-sectional view illustrating one embodiment of a bearing with a sensor in accordance with the present invention, which is a double row tapered roller bearing with a rotary sensor provided in the lower part of an outer ring.
Fig. 2 is a bottom view of Fig. 1.
Fig. 3 is a left side view of Fig. 1.
Fig. 4 is a cross-sectional view illustrating another embodiment of the present invention, or a bearing with a rotary sensor attached to an outer ring using a different attachment structure.
Fig. 5 is a bottom view of Fig. 4.
Fig. 6 is a left side view of Fig. 4.
Fig. 7 is a schematic cross-sectional view illustrating yet another embodiment of the present invention, or a double row tapered roller bearing with a rotary sensor provided in the upper part of an outer ring.
Fig. 8 is a left side view of Fig. 7 without the front cover.
Fig. 9 is a cross-sectional view illustrating still another embodiment of the present invention, or a bearing with a rotary sensor attached to an outer ring using a different attachment structure.
Fig. 10 is a top plan view of Fig. 9.
Fig. 11 is a schematic cross-sectional view illustrating a conventional bearing with a sensor.

### DETAILED DESCRIPTION OF THE PREFERRED EMBODIMENTS

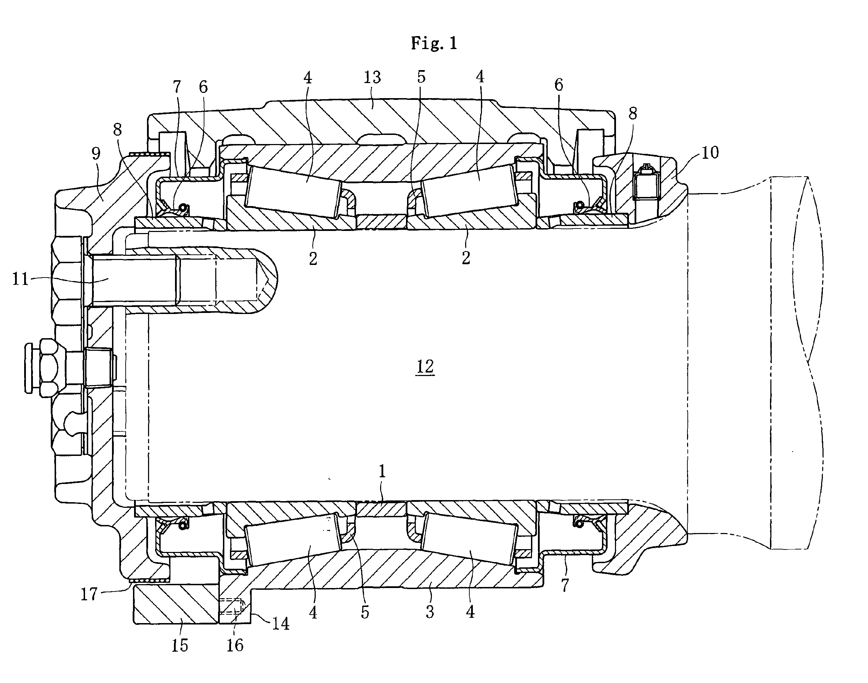

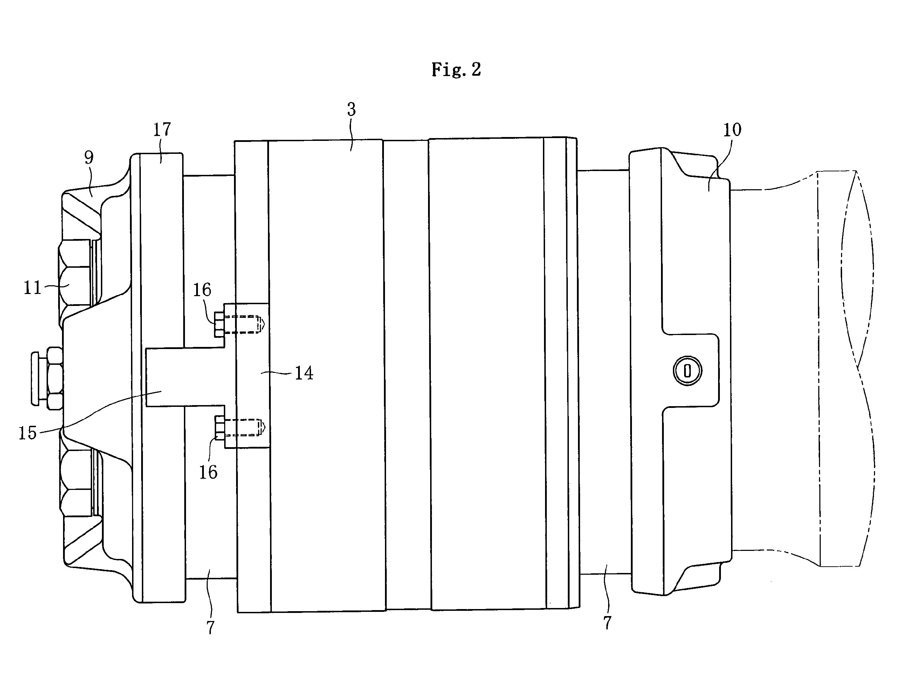

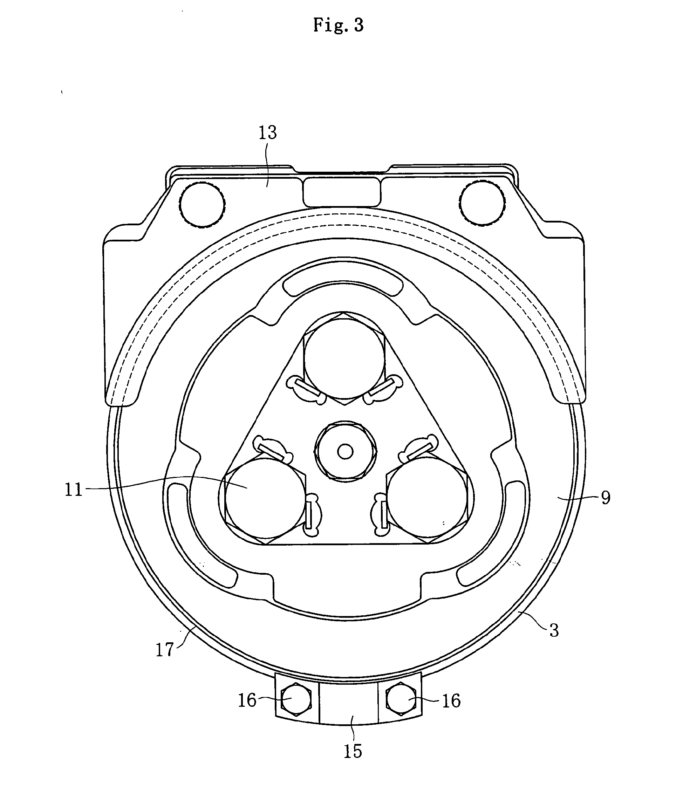

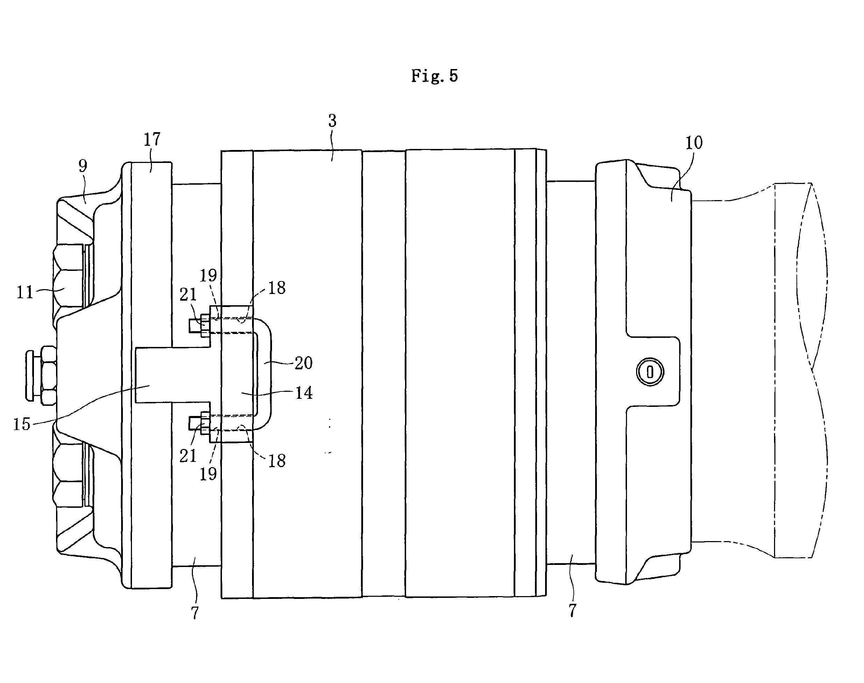

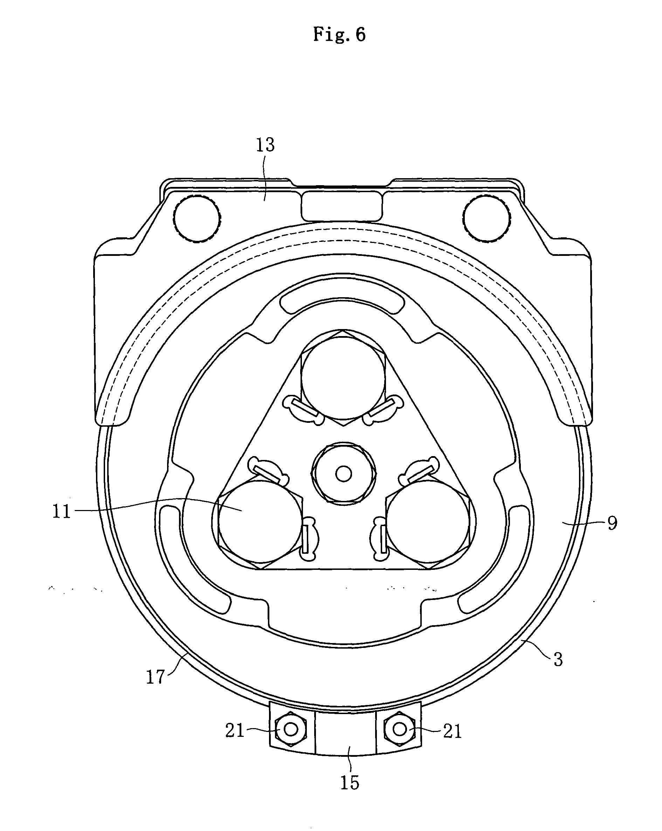

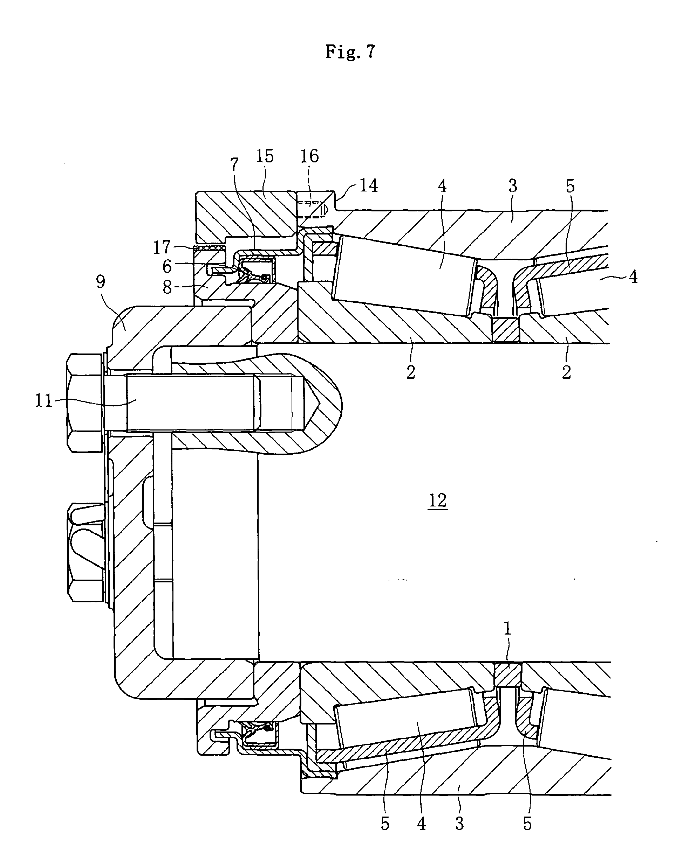

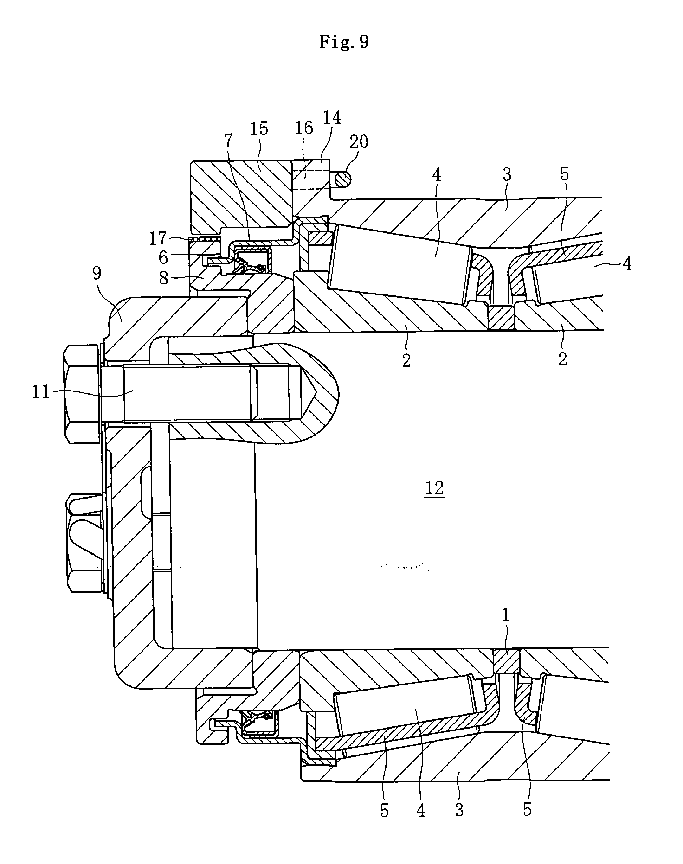

Fig. 1 to Fig. 10 are given for the description of one embodiment of the bearing with a sensor of the present invention used as an axle bearing of a railway vehicle such as a freight car, Fig. 1 to Fig. 6 illustrating one embodiment in which the sensor is attached to the outside diameter lower part of the outer ring, and Fig. 7 to Fig. 10 illustrating another embodiment in which the sensor is attached to the outside diameter upper part of the outer ring. The housing is not illustrated in the embodiment of Fig. 7 to Fig. 10.

The bearing with a sensor shown in the embodiment shown in Fig. 1 to Fig. 3 is mainly composed of a pair of inner rings 2 axially adjacent to each other with a spacer 1 therebetween, an outer ring 3 arranged on the outer side of the inner rings 2, two rows of rollers 4 (tapered rollers in the drawings) interposed between the raceways of the inner rings 2 and the outer ring 3 such as to be freely rollable, and retainers 5 for retaining each row of rollers 4 circumferentially at circular pitches. This bearing is used as an axle bearing of a railway vehicle, and therefore includes a housing 13 attached to the outside diameter upper part of the outer ring 3 for mounting this bearing to the railway vehicle.

Oil seal cases 7 having oil seals 6 inside are fitted to the inner circumferential surface at both ends of the outer ring 3, and oil-cutting members 8 that are in sliding contact with the oil seals 6 are arranged on the outer side of each inner ring 2. A front cover 9 is arranged at the shaft end and a rear cover 10 is arranged on the opposite side from the front cover 9, with the front cover 9 being fastened to the axle 12 with a bolt 11 to securely attach the bearing to the axle 12.

In this embodiment, the outer ring 3 includes a radially protruding projection 14 in the lower part of the outside diameter thereof, and a rotary sensor 15 is attached to the end surface of this projection 14. In this embodiment, the rotary sensor 15 is securely attached to the projection 14 of the outer ring 3 using two screws 16. The rotary sensor 15 can be a reflection type photoelectric switch or the like, and an encoder 17 is arranged on the outer circumferential end surface of the front cover 9 opposite the light transmitting/receiving part of the sensor.

With the rotary sensor 15 attached to the outer ring 3 as described above, the number of rotation of the inner ring 2 (axle 12), which is a rotating member relative to a stationary member or the outer ring 3, can be measured. Since the rotary sensor 15 is firmly attached to the outer ring 3 that has high rigidity, the measurement of the number of rotation of the bearing can be made accurately with this rotary sensor 15. Also, because the rotary sensor 15 is attached to the outside diameter lower part of the outer ring 3 where the housing 13 is not attached, the housing 13 will cause no obstruction to the attachment of the rotary sensor 15.

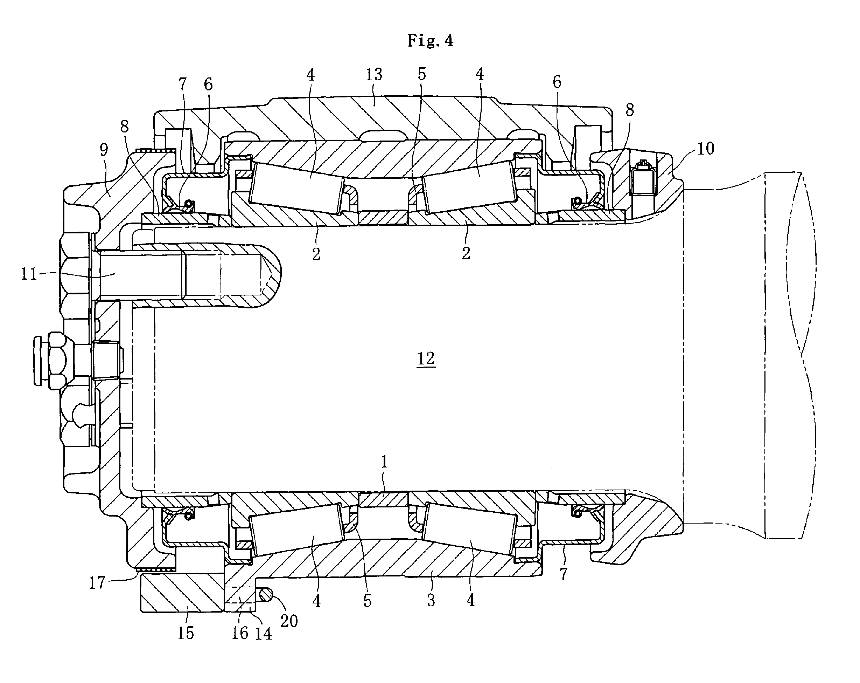

While this embodiment applies the structure wherein the rotary sensor 15 is securely attached to the projection 14 of the outer ring 3 with two screws 16, other attachment structures may be applied, such as the one shown in Fig. 4 to Fig. 6. In the structure shown in Fig. 4 to Fig. 6, two through holes 18 and 19 are formed along the axial direction in the projection 14 of the outer ring 3 and in the flange of the rotary sensor 15, and both ends of a U-shaped member 20 having screws at the tips are inserted into these through holes 18 and 19, with the respective ends being fastened with nuts 21, so that the rotary sensor 15 is securely attached to the projection 14 of the outer ring 3.

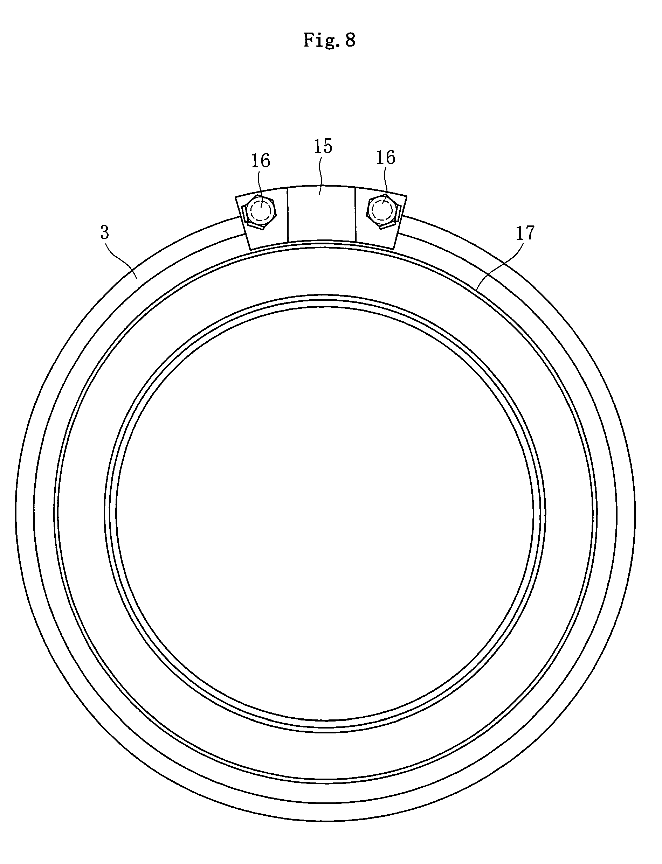

While the bearing has a rotary sensor 15 attached to the lower part of the outer ring 3 in the embodiment described above, the invention is not limited thereto, and the rotary sensor 15 can be attached to the upper part of the outer ring 3 as shown in Fig. 7 and Fig. 8. The attachment structure of the rotary sensor 15 includes, similarly to the embodiment shown in Fig. 1 to Fig. 3, a projection 14 radially protruding from the outside diameter upper part of the outer ring 3 and two screws 16 for securely attaching the rotary sensor 15 to the end surface of the projection 14.

In this embodiment, the housing, which is not shown, is attached to the outside diameter upper part of the outer ring 3, and the projection 14, which is formed to the upper part of the outside diameter of the outer ring 3 and to which the rotary sensor 15 is attached, is stopped from rotating by making contact with the housing, whereby disconnection of wires of the rotary sensor 15 is prevented.

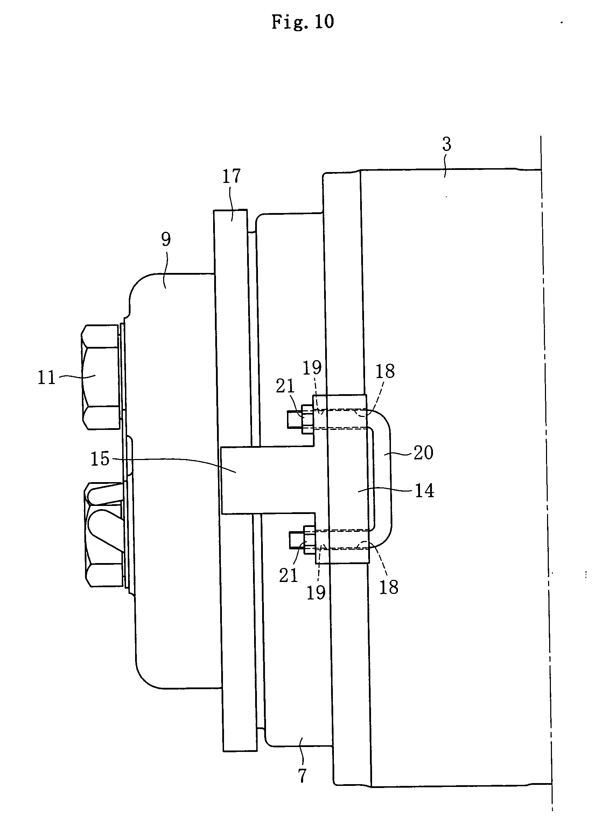

Further, in another attachment structure for the rotary sensor 15, similarly to the embodiment shown in Fig. 4 to Fig. 6, through holes 18 and 19 may be formed in the projection 14 of the outer ring 3 and in the flange of the rotary sensor 15 as shown in Fig. 10, and both ends of a U-shaped member 20 may be inserted into these through holes 18 and 19, with the respective ends being fastened with nuts 21, so that the rotary sensor 15 is securely attached to the projection 14 of the outer ring 3.

While a rotary sensor 15 is attached as a sensor for sensing the rotation state in this embodiment, a vibration sensor for sensing vibration of the bearing or a temperature sensor for sensing temperature inside the bearing other than the rotary sensor 15 may also be attached. Since these sensors are directly and fixedly attached to the outer ring 3 as mentioned above, vibration in the bearing can be measured accurately with a vibration sensor, and, temperature of the bearing components can be measured accurately with a temperature sensor.

## Claims

1. A bearing with a sensor **characterized in that** a plural of rollers rollably retained with a retainer are accommodated between an inner ring and an outer ring, and a sensor for sensing a rotation state of the bearing is directly attached to the outer ring.

2. The bearing with a sensor according to claim 1, wherein the sensor is arranged in an outside diameter lower part of the outer ring in which a housing is provided to an outside diameter upper part of the outer ring.

3. The bearing with a sensor according to claim 1 or 2, wherein a radially protruding projection is provided to a portion of the outside diameter of the outer ring, with the sensor being attached to an end face of the projection.

4. The bearing with a sensor according to any one of claims 1 to 3, wherein the sensor is at least one selected from the group consisting of a vibration sensor, a rotary sensor, and a temperature sensor.

5. The bearing with a sensor according to any one of claims 1 to 4, wherein the rollers are any of double row cylindrical rollers and double row tapered rollers.

6. The bearing with a sensor according to any one of claims 1 to 5, wherein the bearing is one for rotatably supporting an axle of a railway vehicle.
